# EUROPEAN PATENT SPECIFICATION

(11) **EP 3 892 937 B1**
(45) Date of publication and mention of the grant of the patent: **22.11.2023**
(21) Application number: 21166976.7
(22) Date of filing: 06.04.2021
(51) Int. Cl.: F24H 9/13, F24H 4/04, F24H 9/20, F28D 20/00, F28D 9/00, F28D 1/02

(54) **WATER-HEATER TANK FOR HEAT PUMP SYSTEM AND METHOD OF CONTROLLING THE SAME**
WASSERHEIZTANK FÜR EIN WÄRMEPUMPENSYSTEM UND STEUERUNGSVERFAHREN DAFÜR
RÉSERVOIR DE CHAUFFE-EAU POUR SYSTÈME DE POMPE À CHALEUR ET SON PROCÉDÉ DE COMMANDE

(30) Priority: 07.04.2020 KR 20200042333
(43) Date of publication of application: 13.10.2021
(73) Proprietor: LG Electronics Inc., Seoul 07336 (KR)
(72) Inventor: PARK, Minsu, 08592 Seoul (KR); KIM, Hyunjong, 08592 Seoul (KR); SUNG, Dongwon, 08592 Seoul (KR); LEE, Yeol, 08592 Seoul (KR); YEO, Kyungmok, 08592 Seoul (KR)
(74) Representative: Vossius & Partner Patentanwälte Rechtsanwälte mbB

(56) References cited:
- WO-A1-2016/184961
- DE-A1- 10 316 363
- DE-C1- 3 202 471
- US-A1- 2018 163 979

## Description

### BACKGROUND OF THE INVENTION

### 1. Field of the invention

The present invention relates to a water-heater tank for a heat pump system and a method of controlling the same, and more particularly to a water-heater tank for a heat pump system with an improved structure and operation, and a method of controlling the same.

### 2. Description of the Related Art

An eco-friendly heat pump system with a relatively high thermal efficiency may be installed for cooling, heating, or cooling and heating buildings. The heat pump system may be provided with a water-heater tank storing hot water, such that when required by a user, the hot water may be provided for the user.

Generally, the water-heater tank for the heat pump system has a hot water capacity which is fixed to a predetermined value. That is, when hot water is discharged from the water-heater tank as a user uses the hot water, service water (city water or feed water) is introduced in an amount corresponding to an amount of the discharged water, so as to maintain a fixed capacity of hot water. The service water has a lower temperature than water placed in the water-heater tank, such that when the service water is introduced, high-temperature water and low-temperature water are present together in the water-heater tank. In this case, the low-temperature water has a higher density than the high-temperature water, such that stratification occurs, in which the high-temperature water is present on an upper side of the water-heater tank, the low-temperature water is present on a lower side thereof, and an intermediate layer (thermocline), where water temperature changes, is disposed therebetween.

In a general water-heater tank, stratification is maintained so that temperature of water to be discharged may not be lowered. That is, while maintaining a temperature difference between the high-temperature water present on the upper side and the low-temperature water present on the lower side, a water outlet tube is provided on the upper side, so as to discharge and use the high-temperature water present on the upper side of the water-heater tank. Further, a water inlet tube is provided on the lower side of the water-heater tank so that water, introduced through the water inlet tube and having a relatively low temperature, may be present on the lower side.

However, stratification is significantly affected by velocity, flow rate, etc. of the introduced service water, such that if a velocity or a flow rate of the service water is high, it is difficult to maintain stratification, such the water temperature is difficult to be maintained constant at the upper side of the general water-heater tank. Further, in the general water-heater tank, heat exchange is performed by natural convection, and thus is greatly affected by temperature, such that heat exchange may not take place if a difference in water temperature is reduced as low-temperature water is heated. Accordingly, the general water-heater tank has a problem in that a water discharge temperature may not be maintained constant, and a heat exchange efficiency is low.

As an example of a related art, Chinese Patent Publication No. 102022830 discloses a method of changing a hot water capacity. The related art discloses a method of changing an initial set value of the capacity of hot water, in which in order to maintain stratification, when hot water is used, water is introduced such that a capacity of the hot water is fixed. Accordingly, the related art still has the problem of maintaining stratification, and there is no substantial difference in position between a water outlet tube and a water inlet tube, such that the related art has limitations in maintaining discharged water at a high temperature.

### [PRIOR ART DOCUMENT]

### [Patent Document]

Chinese Patent Publication No. 102022830 (title of the invention: CAPACITY-VARIABLE WATER TANK FOR HEAT PUMP WATER HEATER) DE 103 16 363 A1 discloses a hot water storage tank for storing heat in layers.

### SUMMARY OF THE INVENTION

The present invention is defined by the appended independent claims, and preferred embodiments of the invention are defined by the appended dependent claims.

It is an object of the present invention to provide a water-heater tank for a heat pump system, which may improve heat exchange efficiency, and a method of controlling the same.

More specifically, it is another object of the present invention to provide a water-heater tank for a heat pump system, in which a number of times and a period of heating hot water may be reduced while maintaining the hot water at a high temperature.

Particularly, in the present invention, stratification may be prevented or minimized, and heat transfer may take place by forced convection during heating, thereby improving heat exchange efficiency.

In accordance with the present invention, a water-heater tank for a heat pump system has a structure in which a capacity of a storage space is changed as hot water is discharged. A water-heater tank according to an aspect of the present invention includes: a main body having an internal space and one open side; and a capacity changing member arranged to close the one open side of the main body and thereby form a storage space in the internal space of the main body, in which hot water can be stored, and being movable relative to the main body so that a capacity of the storage space can be changed as the hot water is discharged.

The water-heater tank further includes a water inlet tube fixedly installed at the capacity changing member and having a flow rate control valve. When the hot water is discharged, the flow rate control valve is closed to block inflow of service water into the storage space.

Here, at least a portion of the water outlet tube may be moved along with the capacity changing member, such that even when the capacity changing member is moved, a constant distance may be maintained between an end portion of said portion of the water outlet tube, and the capacity changing member.

The water outlet tube may include a variable length portion having a variable length. This variable length portion is formed at an outer portion of the water outlet tube. Here, the variable length portion may be made of a flexible material or an elastic material, which is different from other portions of the water outlet tube; or may have a corrugated shape. In another example, the water outlet tube may have a double pipe structure with an inner tube and an outer tube, such that the variable length portion may be formed by a variable length of an overlapping portion of the inner tube and the outer tube.

The capacity changing member may include an inner portion and a pressed portion formed along the inner portion, wherein a material of the inner portion (14a) is harder than that of the pressed portion (14b). This structure thereby forms a stable watertight structure.

The capacity changing member may be formed as a floating disk which floats on the hot water by buoyancy. According to the invention, the water-heater tank further comprises a driving member coupled to the capacity changing member and configured for providing a driving force for moving the capacity changing member. By the balance between buoyancy and the driving force, the capacity changing member may form a stable watertight structure.

Preferably, the water-heater tank may further include a reference water level sensing member disposed at a reference position of the storage space. When the capacity changing member is positioned at a reference water level or below as the hot water is discharged, the service water may be introduced into the water-heater tank to be heated while discharge of the hot water is stopped.

In accordance with another aspect of the present invention, there is provided a method of controlling the water-heater tank identified above, the method comprises moving the capacity changing member so that a capacity of the storage space is changed, while inflow of the feed water is blocked.

In response to a level of the hot water being lower than or equal to a reference water level as the hot water is discharged, a water heating mode of supplying service water into the storage space and heating the supplied water is performed. The water heating mode may be performed while the discharge of the hot water is blocked. In the water heating mode, a water supply period and a water supply blocking period are performed repeatedly while the hot water is heated continuously. Further, in response to the capacity changing member or a water surface being located at an initial position and a water temperature, sensed by a water temperature sensing member, reaching a predetermined value, the water heating mode may end.

In response to temperature of the hot water being lower than a reference temperature, a water heating mode without water supply may be performed in which heating is performed without supplying the service water.

### EFFECTS OF THE INVENTION

According to the invention, when hot water is discharged, supply of service water having a lower temperature than the hot water is blocked, thereby preventing or minimizing stratification which may occur when service water having a relatively low temperature is introduced during the discharge of the hot water. That is, a capacity of a storage space is changed in real time as the hot water is sued, thereby preventing or minimizing stratification or temperature gradient. Accordingly, the temperature of the hot water may be maintained as high as possible, and the influence of an external environment may be minimized.

Further, a water heating mode with water supply is performed only when a level of the hot water is lower than or equal to a reference water level, such that a number of times, a period, and the like of a water heating mode for heating the hot water in the water-heater tank may be reduced. In addition, the water heating mode with water supply is performed by supplying water while the discharge of the hot water is stopped, such that turbulence occurs in the water-heater tank due to a high Reynolds number, and heat transfer may take place by forced convection. In this case, compared to natural convection, thermal resistance may be significantly reduced, thereby greatly improving heat exchange efficiency.

### BRIEF DESCRIPTION OF THE DRAWINGS

FIG. 1 is a diagram illustrating a configuration of an example of a heat pump system including a water-heater tank for a heat pump system according to an embodiment.
FIG. 2 is a cross-sectional view schematically illustrating a configuration of a water-heater tank for a heat pump system according to an embodiment.
FIG. 3 is a perspective view of a capacity changing member included in the water-heater tank illustrated in FIG. 2.
FIG. 4 is a perspective view of a portion of a water outlet tube included in a water-heater tank according to a modified embodiment.
FIG. 5 is a cross-sectional view of a portion of a water outlet tube included in a water-heater tank according to another modified embodiment.
FIG. 6 is a flowchart illustrating a method of controlling a water-heater tank for a heat pump system according to an embodiment.

### DETAILED DESCRIPTION OF THE PREFERRED EMBODIMENTS

Reference will now be made in detail to embodiments of the present invention which are illustrated in the accompanying drawings.

In order to clearly and briefly describe the present invention, components that are irrelevant to the description will be omitted in the drawings, and same reference numerals are used throughout the drawings to designate the same or extremely similar elements.

Terms "module" and "unit" for elements used in the following description are given simply in view of the ease of the description, and do not carry any important meaning or role. Therefore, the "module" and the "part" may be used interchangeably.

Hereinafter, a water-heater tank for a heat pump system (hereinafter referred to as a water-heater tank) and a method of controlling the same will be described in detail below with reference to the accompanying drawings.

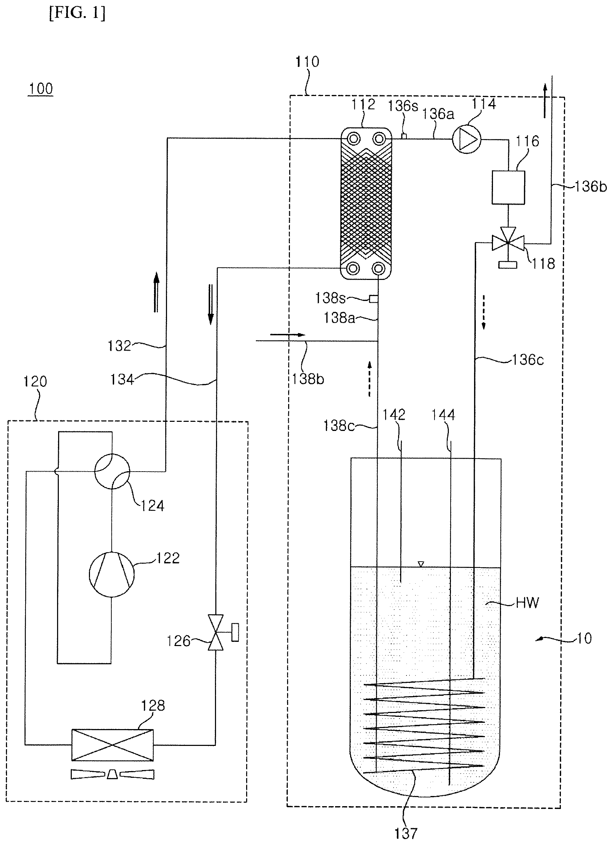

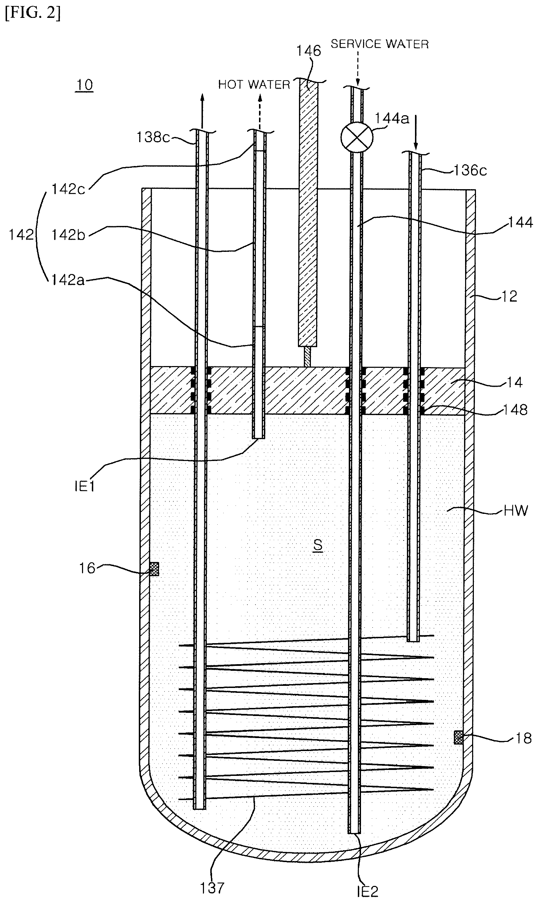

FIG. 1 is a diagram illustrating a configuration of an example of a heat pump system 100 including a water-heater tank 10 according to an embodiment. In FIG. 1 and in the following description thereof, only necessary elements of the water-heater tank 10 associated with the heat pump system 100 will be briefly illustrated and given for simple illustration and better understanding of the present disclosure, and the water-heater tank 10 will be described in further detail later with reference to FIGS. 2 to 5.

Referring to FIG. 1, the heat pump system 100 according to an embodiment includes: an indoor part 110 provided indoors and performing heat exchange between the interior and a refrigerant; and an outdoor part 120 provided outdoors and performing heat exchange between the exterior and a refrigerant. In this case, the heat pump system 100 may include the water-heater tank 10 storing hot water HW and providing the stored hot water HW. For reference, service water as used herein may collectively refer to water, city water, feed water, etc., which circulate through base pipes 136a and 138a, heating pipes 136b and 138b, and hot water pipes 136c, 137, and 138c; and the hot water HW may refer to service water placed in or discharged from the water-heater tank 10.

Here, the outdoor part 120 may include a compressor 122, a 4-way valve 124, an expansion valve 126, and an outdoor heat exchanger 128; and the indoor part 110 may include an indoor heat exchanger 112 and a circulation pump 114. In addition, the indoor part 110 may further include an auxiliary heater 116, water temperature sensing members 136s and 138s, and the like. In this embodiment, an integrated water-heater tank is provided in which the water-heater tank 10 is included in the indoor part 110, and a 3-way valve 118 may be further included to control the flow of water in the indoor part 110. Accordingly, a structure of the heat pump system 100 having the water-heater tank 10 may be simplified.

The compressor 122 may compress a low-pressure refrigerant to a high-pressure refrigerant. The 4-way valve 124 may control a cooling or heating operation, and may determine a direction of a refrigerant passage. For example, during a cooling operation, the 4-way valve 124 may direct a refrigerant, compressed by the compressor 122, to the outdoor heat exchanger 128, and during a heating operation, the 4-way valve 124 may direct the refrigerant to the indoor heat exchanger 112. The expansion valve 126 may adiabatically expand a liquid refrigerant into a low-pressure refrigerant. The outdoor heat exchanger 128 may serve as an evaporator during the heating operation, and may serve as a condenser during the cooling operation. The indoor heat exchanger 122 may serve as a condenser during the heating operation, and may serve as an evaporator during the cooling operation.

In this embodiment, various structures, methods, and the like may be applied to the compressor 122, the 4-way valve 124, the outdoor heat exchanger 128, or the indoor heat exchanger 112. For example, the indoor heat exchanger 112 may be formed as a plate heat exchanger, having a large heat transfer area providing a high heat transfer capacity, and the heat transfer area may be adjusted easily by adjusting a number of plates. However, various other structures, methods, and the like may be applied to the indoor heat exchanger 112.

The following description will be focused on an example in which the heat pump system 100 operates as a heating device for implementing a heating mode for increasing the indoor temperature. However, the heat pump system 100 may operate as a cooling and heating device by implementing both the heating and cooling modes.

The indoor part 110 and the outdoor part 120 may be connected to each other by first and second refrigerant flow tubes 132 and 134 serving as flow passages of the refrigerant. Further, a base supply pipe 136a for supplying hot water and a base return pipe 138a for returning the service water after being heated may be connected to the indoor heat exchanger 112. The circulation pump 114 providing a driving force for circulation of the service water may be provided for the base supply pipe 136a. In addition, the auxiliary heater 116 for further heating the service water may be provided for the base supply pipe 136a so as to improve thermal efficiency, but the auxiliary heater 116 is not an essential component and may be omitted. In this case, the water temperature sensing members 136s and 138s for sensing temperature of the water flowing through the base supply pipe 136a and the base return pipe 138a may be provided.

In this embodiment, an indoor heating mode for heating the indoor space may be performed along with a water heating mode for heating the hot water HW. That is, in the indoor heating mode, service water supplied from the base supply pipe 136a may circulate through the heating pipes 136b and 138b, and in the water heating mode, service water supplied from the base supply pipe 136a may circulate through the hot water pipes 136c, 137, and 138c. To this end, along with the heating pipes 136b and 138b (particularly, the heating pipe 136b) and the hot water pipes 136c, 137, and 138c (particularly, the supply pipe 136c), the base supply pipe 136a may be connected to the 3-way valve 118. Further, the return pipe 138b of the heating pipes 136b and 138b and the return pipe 138c of the hot water pipes 136c, 137, and 138c may be connected to the base return pipe 138a. The 3-way valve 118 controls the service water, supplied from the base supply pipe 136a, to circulate through the heating pipes 136b and 138b in the indoor heating mode, and to circulate through the hot water pipes 136c, 137, and 138c in the water heating mode.

In this embodiment, a connection structure of the base pipes 136a and 138a, the heating pipes 136b and 138b, the hot water pipes 136c, 137, and 138c, and the like is merely an example, and may be modified in various ways. In addition, various known structures, methods, and the like may be applied to the circulation pump 114, the auxiliary heater 116, the 3-way valve 118, and the water temperature sensing members 136s and 138s.

In addition, the water-heater tank 10 may have a storage space (S of FIG. 2, the same applies hereinafter) in which the hot water HW is stored, and may include a water outlet tube 142, through which the hot water HW is discharged from the storage space S, and a water inlet tube 142 providing service water to the storage space S. In this embodiment, a heat exchanger for heating the service water or the hot water HW stored in or introduced into the water-heater tank 10 may be provided in the water-heater tank 10. That is, an immersed heat exchanger may be configured in such a manner that a coil 137 for circulation of hot water, which connects the supply pipe 136c and the return pipe 138c of the hot water pipes 136c, 137, and 138c, may be disposed in the storage space S of the water-heater tank 10.

For simple illustration, FIGS. 1 and 2 only schematically illustrate a shape of the coil 137 for circulation of hot water, but the coil 137 for circulation of hot water may be formed as a pipe, having a coil shape, through which hot water, having high-temperature after being heat-exchanged by the indoor heat exchanger 112, flows. In this manner, the heat exchanger is disposed inside the storage space S, such that the service water or the hot water HW stored in or introduced into the storage tank 10 may be heated effectively. However, the heat exchanger for heating the service water or the hot water HW stored in or introduced into the water-heater tank 10 may also be disposed outside of the water-heater tank 10 to heat the hot water HW or the service water by radiation, conduction, etc., and various other modifications may be made.

In the heating mode such as the indoor heating mode or the water heating mode, a high-temperature and high-pressure gaseous refrigerant, compressed by the compressor 122, flows toward the indoor heat exchanger 112 by the 4-way valve 124, as indicated by a double-line arrow in FIG. 1. The high-temperature and high-pressure gaseous refrigerant is converted into a liquid refrigerant by passing through the indoor heat exchanger 112, and pressure of the refrigerant drops as the refrigerant passes through the expansion valve 126, such that the refrigerant is converted into a low-temperature and low-pressure liquid refrigerant. The low-temperature and low-pressure liquid refrigerant is guided to the outdoor heat exchanger 128, and is evaporated by absorbing heat from outdoor cold air at the outdoor heat exchanger 128, to be converted into a gaseous refrigerant and guided by the 4-way valve 124 to flow to the compressor 122. The heating mode may be performed by continuously repeating the above process.

In this case, the service water, having high temperature after being heat-exchanged by the indoor heat exchanger 112, may circulate through the heating pipes 136b and 138b in the indoor heating mode as indicated by a solid line arrow in FIG. 1; and in the water heating mode, the service water may circulate through the hot water pipes 136c, 137, and 138c to heat the service water or the hot water HW stored in the water-heater tank 10, as indicated by a dotted line arrow in FIG. 1.

For circulation of the refrigerant and the service water in the aforementioned water-heater tank 10 and the heat pump system 100 including the same, and controlling on/off of the heating mode, the indoor heating mode, the water heating mode, and the like, various members included in the water-heater tank 10 and the heat pump system 100 including the same may be controlled by controllers. A controller for controlling the indoor part 110, a controller for controlling the water-heater tank 10, and/or a controller for controlling an outdoor part 120, and the like may be provided together or separately, and various structures, methods, and the like may be applied thereto.

The water-heater tank 10 according to the embodiment, included in the heat pump system 100, will be described in further detail with reference to FIGS. 2 to 5.

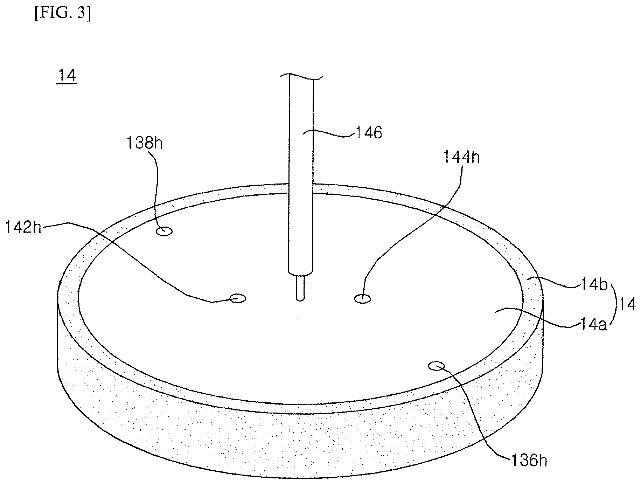

FIG. 2 is a cross-sectional view schematically illustrating a configuration of the water-heater tank 10 included in the heat pump system 100 according to an embodiment; and FIG. 3 is a perspective view of a capacity changing member 14 included in the water-heater tank 10 illustrated in FIG. 2.

Referring to FIGS. 2 and 3, the water-heater tank 10 according to an embodiment includes: a main body 12 having an internal space and one open side; and the capacity changing member 14 which forms the storage space S for storing the hot water HW by closing one side of the internal space of the main body 12, and which moves so that a capacity of the storage space S may be changed. In addition, the water-heater tank 10 further includes a driving member 146, the water outlet tube 142, the water inlet tube 144, a flow rate control valve 144a, and may further include a reference water level sensing member 16, a water temperature sensing member 18, and the like, which will be described in further detail below.

The water-heater tank 10 may include the storage space S, in which the hot water HW is placed, and the internal space in which the capacity changing member 14 forming the storage space S is disposed. In this embodiment, the water-heater tank 10 has one open side (e.g., upper side), and the capacity changing member 14 forms the storage space S by closing the one side (e.g., upper side) of the internal space. In this structure, the water-heater tank 10 may have a simple shape, and the storage space S may be easily sealed by the capacity changing member 14 disposed on one side of the internal space. Further, the capacity of the storage space S may be easily changed as the capacity changing member 114 moves in one direction (e.g., up-down direction). In this case, if the capacity changing member 14 is disposed at an upper part and the storage space S storing the hot water HW is disposed below the capacity changing member 14, the hot water HW may be placed stably, such that stability may be improved. The main body 12 may be made of various materials, having excellent insulation characteristics so that temperature of the hot water HW placed therein may not be lowered easily, and having high corrosion resistance so that corrosion may not occur due to the hot water HW and the like.

The capacity changing member 14 is disposed in the internal space of the water-heater tank 10, and by closing the one open side of the water-heater tank 10, the capacity changing member 14 may form a watertight structure in which the storage space S is separated from the outside. As the watertight structure is formed by the capacity changing member 14 as described above, excellent insulation characteristics may be obtained, thereby effectively preventing reduction in temperature of the hot water placed in the storage space S. For example, the capacity changing member 14 may be formed as a plate having a planar shape, which coincides with a planar shape of the main body 12, and having a predetermined thickness. That is, the capacity changing member 14 may be an upper plate, a top panel, a top cover, and the like.

For example, as illustrated in FIG. 3, the capacity changing member 14 may include: an inner portion 14a having excellent insulation characteristics and made of a hard material; and a pressed portion 14b formed along an outer edge of the inner portion 14a and made of an elastic material (e.g., rubber) or a soft material (e.g., resin). Accordingly, while improving insulation characteristics by using the inner portion 14a, an excellent watertight structure may be obtained by using the pressed portion 14b. The inner portion 14a may be made of a material having better insulation characteristics than the pressed portion 14b, and capable of maintaining a desired shape, and may be made of various materials such as a resin, metal, and the like. The pressed portion 14b may be formed as an O-ring member, and particularly a dynamic O-ring, which may be moved easily under pressure while maintaining sealing characteristics.

For example, the inner portion 14a may have a first hole 142h, through which the water outlet tube 142 passes, a second hole 144h, through which the water inlet tube 144 passes, a third hole 136h, through which the supply pipe 136c passes, and a fourth hole 138h, through which the return pipe 138c passes. Positions, arrangements, shapes, and the like of the first hole 142h, the second hole 144h, the third hole 136h, and the fourth hole 138h may be modified variously.

In addition, a driving member 146 providing a driving force for moving the capacity changing member 14 is coupled to the capacity changing member 14. The driving force 146 may have various structures, shapes, methods, and the like for moving the capacity changing member 14. In this embodiment, the driving member 146 may be formed as a cylinder member (e.g., hydraulic cylinder member), which allows for a simple structure for moving the capacity changing member 14 to a desired position with a strong driving force. For example, FIG. 3 illustrates a structure in which one driving member 146 is disposed at the center of the capacity changing member 14, thereby stably providing the driving force throughout the capacity changing member 14 in a simplified structure. However, various modifications may be made, including providing a plurality of capacity changing members 14 and the like.

In this embodiment, once the hot water HW is discharged such that a volume of the hot water HW in the main body 12 is reduced, the driving member 146 may serve to move the capacity changing member 14 according to the reduced volume of the hot water HW. That is, when the hot water is discharged such that the volume of the hot water is reduced, the driving member 146 moves the capacity changing member 14 downwardly, so as to reduce the storage space S in which the hot water is placed. Further, when hot water HW is insufficient such that a predetermined amount of service water is introduced, the driving member 146 moves the capacity changing member 14 upwardly, so as to increase the storage space S in which the hot water HW is placed.

In this case, the driving member 146 may adjust a position of the capacity changing member 14 by using various methods. In this embodiment, in another example, the capacity changing member 14 may be formed as a floating disk which floats on the hot water HW. Accordingly, by the balance achieved between buoyancy of the capacity changing member 14 and the driving force of the driving member 146, the capacity changing member 14 may float on the surface of the hot water HW, thereby forming a watertight structure. In this manner, even when the hot water HT is discharged, the capacity changing member 14 may stably form the watertight structure.

In yet another example, by providing a water level sensing member for sensing a water surface position of the hot water HW, the position of the capacity changing member 14 may be adjusted based on a water level sensed by the water level sensing member. In still another example, by measuring a water discharge amount using a water discharge amount sensing member provided for the water outlet tube 142, a water surface position of the hot water HW may be identified, and a position of the capacity changing member 14 may be adjusted based on the identified position. In still another example, by sensing temperature of supplied service water and an amount of the supplied water using a temperature sensing member and a water supply amount sensing member provided for the water inlet tube 144, a water surface position of the hot water may be identified based on the sensed information, and a position of the capacity changing member 14 may be adjusted accordingly.

Further, the capacity changing member 14 may be provided with the water outlet tube 142, through which the hot water HW is discharged, and the water inlet tube 144 through which the service water is introduced. In this case, an inner end portion IE1 of the water outlet tube 142 may be positioned adjacent to the capacity changing member 14, so that the hot water HW placed at one side of the storage space S (e.g., upper side of the storage space S), which is adjacent to the capacity changing member 14, may be discharged, thereby allowing the hot water HW having a relatively high temperature may be discharged. By contrast, an inner end portion E2 of the water inlet tube 142 may be positioned far away from the capacity changing member 14, so that service water having a relatively low temperature may be introduced into the other side of the storage space S (e.g., lower side of the storage space S), which is disposed far away from the capacity changing member 14. In this manner, the service water may be introduced into a portion where the coil 137 for circulation of hot water is disposed, which heats the service water or the hot water HW stored in or introduced into the water-heater tank 10, thereby allowing the service water to be heated effectively.

In this embodiment, the position of the capacity changing member 14 is changed according to the water discharge amount of the hot water HW as described above, in which the water outlet tube 142, which is dependent on the capacity changing member 14, moves along with the capacity changing member 142, thereby allowing the hot water HW to be discharged at a portion adjacent to the capacity changing member 14. That is, even when the capacity changing member 14 moves, a constant distance may be maintained between the inner end portion IE1 of the water outlet tube 142 and the capacity changing member 14.

To this end, the water outlet tube 142 may have a first fixed portion 142a unmovably fixed to the capacity changing member 14 while having the inner end portion IE1, and may have a variable length portion 142b disposed on an outer side of the capacity changing member 14 and having a variable length. For example, the first fixed portion 142a of the water outlet tube 142 may be unmovably fixed to the capacity changing member 14 by passing through the first hole 142h.

FIG. 2 illustrates an example in which the variable length portion 142b, connecting the first fixed portion 142a and a second fixed portion 142c connected to the outside, is made of a different material from the first and/or second fixed portions 142a and 142c. For example, the variable length portion 142b may be made of a flexible material, an elastic material, etc., such that the length may be changed according to characteristics of the flexible material, the elastic material, and the like. By contrast, the first and second fixed portions 142a and 142c may be made of a hard material to improve connection stability with the outside and to prevent damage such as corrosion and the like. In this manner, while improving structural stability and reliability of the water outlet tube 142 in a simple structure, the inner end portion IE1 of the water outlet tube 142 may be stably moved to a desired position by the movement of the capacity changing member 14.

In this case, FIG. 2 illustrates an example in which the variable length portion 142 having a different material is disposed between the first and second fixed portions 142a and 142c. Accordingly, without providing the second fixed portion 142c, the entire outer side, except the first fixed portion 142a, may be formed as the variable length portion 142b made of a flexible material, a rubber material, and the like.

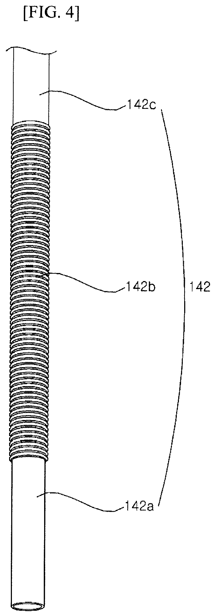

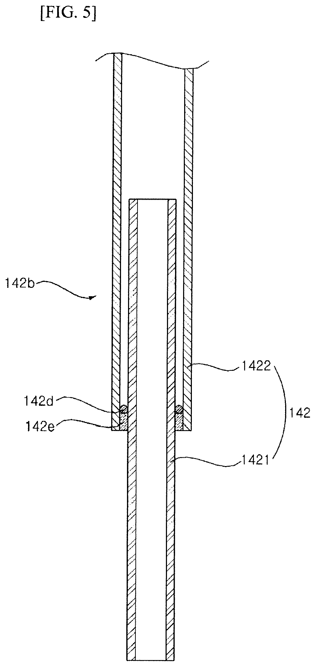

Further, the variable length portion 142b and the water outlet tube 142 including the same may have various structures, methods, shapes, and the like, in addition to the structure described with reference to FIG. 2. Various examples thereof will be described in detail with reference to FIGS. 4 and 5.

FIG. 4 is a perspective view of a portion of the water outlet tube 142 included in the water-heater tank 10 according to a modified embodiment.

Referring to FIG. 4, the variable length portion 142b of the water outlet tube 142 according to the modified embodiment may be formed as a corrugated tube with a plurality of corrugations formed in a circumferential direction. That is, the length of the variable length portion 142b may be changed in such a manner that when the corrugations of the variable length portion 142b extend, the length increases, and when the corrugations of the variable length portion 142b are folded, the length is reduced. While FIG. 4 illustrates an example in which the variable length portion 142b in the form of a corrugated tube is provided between the first and second fixed portions 142a and 142c. Accordingly, without providing the second fixed portion 142c, the entire outer side, except the first fixed portion 142a, may be formed as the variable length portion 142b in the form of a corrugated tube.

FIG. 5 is a cross-sectional view of a portion of the water outlet tube 142 included in the water-heater tank 10 according to another modified embodiment.

Referring to FIG. 5, the water outlet tube 142 according to the modified embodiment may have a double pipe structure and may include a variable length portion 142b. That is, the water outlet tube 142 has a double pipe structure with a variable length of an overlapping portion of an inner tube 1421 and an outer tube 1422, in which the length of the water outlet tube 142 (i.e., the variable length portion 142b) may be changed according to a variable length of the overlapping portion. A guide member 142d for relative movement of the inner tube 1421 and the outer tube 1422, a sealing member 142e for sealing a space therebetween, and the like may be disposed between the inner tube 1421 and the outer tube 1422. Various bearing members, linear movement members, and the like may be used as the guide member 142d, and various known sealing member 142e may be used as the sealing member 142d. FIG. 5 illustrates an example in which a portion of the inner tube 1421 forms the first fixed portion 142a fixed to the capacity changing member 4, and the outer tube 1422 forms the outer portion and is movably installed. However, various modifications may be possible in which a portion of the outer tube 1422 forms the first fixed portion 142a fixed to the capacity changing member 4, and the inner tube 1421 forms the outer portion and is movably installed.

The pipe structures illustrated in FIGs 4 and 5 may also be applied to the water inlet pipe 144 in order for at least a portion of the water inlet pipe 144 to have a variable length.

Referring back to FIGS. 2 and 3, the water inlet tube 144 is fixed to the capacity changing member 14, and includes the flow rate control valve 144a. For example, the water inlet tube 144 may be disposed to pass through the second hole 144h formed in the capacity changing member 14.

The water inlet tube 144 is provided with the flow rate control valve 144a. The flow rate control valve 144a is closed when the hot water HW is discharged, so as to prevent the service water from flowing into the water-heater tank 10 when the hot water HW is discharged. Further, when the hot water HW is not discharged, the flow rate control valve 144a is opened if necessary, so that the service water may flow into the water-heater tank 10, thereby preventing a problem of stratification and the like occurring due to the inflow of the service water having a lower temperature than the hot water HW in the water-heater tank 10, which will be described later in further detail.

Various valves capable of controlling a flow rate may be used as the flow rate control valve 144a. For example, a solenoid valve, which is an opening/closing valve, may be used as the flow rate control valve 144a. Accordingly, when a supply of service water is needed, the flow rate control valve 144a may be opened, and when it is necessary to block the supply of service water, the flow rate control valve 144a may be closed, thereby stably allowing or blocking the supply of service water. Particularly, by using the solenoid valve as the flow rate control valve 144a, effects, such as a high reaction velocity, excellent stability, low leakage, excellent service life, and the like, may be obtained. However, the flow rate control valve may be formed as a valve for controlling an amount of supplied water, as well as for allowing and blocking the supply of service water.

Further, the supply pipe 136c and the return pipe 138c, through which the service water heat-exchanged by the indoor heat exchanger 112 in the water heating mode circulates, may be fixed at the third hole 136h and the fourth hole 138h of the capacity changing member 14, respectively.

The water outlet tube 142 is required to move along with the capacity changing member 14 while being dependent on the capacity changing member 14, so that water may be discharged at a portion adjacent to the capacity changing member 14, but the water inlet tube 144, the supply pipe 136c, and the return pipe 138c may move along with movement of the capacity changing member 14 or may be maintained at predetermined positions regardless of the movement of the capacity changing member 14. As described above, unlike the water outlet tube 142, the water inlet tube 144, the supply pipe 136c, and the return pipe 138c are not particularly limited to positions, and thus are not required to have a portion corresponding to the variable length portion 142b.

A sealing member 148, made of an elastic material (e.g., rubber) or a soft material (e.g., resin), may be disposed at an outer side of the water inlet tube 144, the supply pipe 136c, and the return pipe 138c (i.e., between the water inlet tube 144 and the second hole 144h, between the supply pipe 136c and the third hole 136h, and between the return pipe 138c and the fourth hole 138h). Accordingly, by providing the sealing member 148, excellent watertight structure and insulation characteristics may be achieved. The sealing member 148 may be formed as an O-ring member. The sealing member 148 may be formed as a dynamic O-ring, which may be moved easily under pressure while maintaining sealing characteristics, or may be formed as a fixed O-ring which is maintained in a fixed state even under pressure.

For example, the sealing member 148 is formed as a dynamic O-ring, such that a relative position of the capacity changing member 14 may be moved while upper and lower positions of the water inlet tube 144, the supply pipe 136c, and the return pipe 138c are fixed. That is, the water inlet tube 144, the supply pipe 136c, and the return pipe 138c may be fixed to the capacity changing member 14 in a manner that enables a relative movement. Accordingly, even when the capacity changing member 14 and the water outlet tube 142 connected thereto move, positions of the water inlet tube 144 and the hot water pipes 136c, 137, and 138c may be fixed, thereby improving structural stability.

Further, the reference water level sensing member 16 may be disposed at a reference position of the water-heater tank 10 (more specifically, storage space S). For example, the reference water level sensing member 16 may be disposed on the other side (e.g., lower side) opposite to one side where the capacity changing member 14 is disposed. For example, the reference water level sensing member 16 may be a level switch, and may be, for example, a level switch driven by a mechanical driving method. In this case, if a level of the hot water HW, which is sensed by the level switch, is greater than or equal to a predetermined water level, the water level is maintained without a supply of service water; but if the level of the hot water HW is below the level switch, the service water is introduced into the storage space S of the water-heater tank 10.

In this case, the reference water level sensing member 16 may be provided at a reference position, at which a volume of the hot water in the storage space S is greater than or equal to a predetermined volume, such that a user may use the hot water for a predetermined period of time. For example, the reference position may be a position closer to the capacity changing member 14 than to an inner end portion IE2 of the water inlet tube 144, and may be a position closer to the capacity changing member 14 than to the coil 137 for circulation of hot water. In this structure, the service water introduced through the water inlet tube 144 may be heated effectively by the coil 137 for circulation of hot water.

The water temperature sensing member 18 may be provided for the water-heater tank 10. The water temperature sensing member 18 may be provided to determine whether to heat the hot water HW when temperature of the hot water HW is reduced after not being used for a long period of time. In addition, the water temperature sensing member 18 may be used to determine temperature when the service water or the hot water HW in the water-heater tank 10 is heated. For example, the water temperature sensing member 18 may be disposed at a position of the coil 137 for circulation of hot water or below the position, so as to sense the temperature of the hot water HW having a relatively low temperature in the water-heater tank 10. A temperature sensor having various known structures, methods, and the like may be used as the water temperature sensing member 18, and the position of the water temperature sensing member 18 may be modified in various ways.

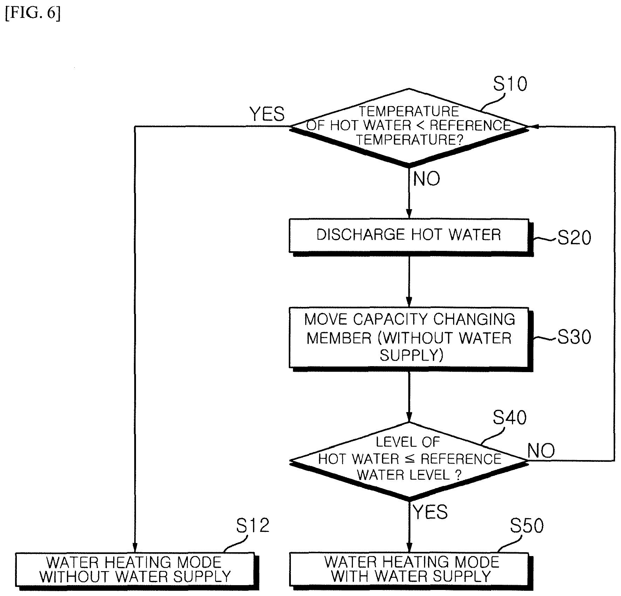

An operation of the water-heater tank 10 described above and a method of controlling the same will be described in detail with reference to FIG. 6, along with FIGS. 1 to 3. The operation of the water-heater tank 10 and the method of controlling the same may be performed by a controller for operation and control of the heat pump 100, a controller for operation and control of the indoor part 110, or an individual controller for operation and control of the water-heater tank 10.

FIG. 6 is a flowchart illustrating a method of controlling the water-heater tank 10 according to an embodiment.

Referring to FIG. 6, in determining of temperature of hot water (S10), it is determined whether the temperature of hot water is lower than a reference temperature. If the temperature of hot water is lower than the reference temperature, a water heating mode without water supply (S12) is performed. More specifically, in the determining of the temperature of hot water (S10), if the temperature of the hot water HW, which is sensed by the water temperature sensing member 18, is lower than the reference temperature, a water heating mode is performed in which the service water or the hot water HW in the water-heater tank 10 is heated by circulating the service water, heat-exchanged by the indoor heat exchanger 112, through the heating pipes 136c, 137, and 138c by the 3-way valve 118. In this case, the water heating mode may be the water heating mode without water supply (S12), which is performed without the supply of service water while discharge of the hot water HW is stopped. The water heating mode without water supply (S12) may be performed when temperature of the hot water HW is reduced after the hot water HW is not used for a long period of time, and the like.

In this case, the water heating mode without water supply (S12) may be performed continuously until temperature of the hot water HW, sensed by the water temperature sensing member 16, reaches a predetermined value. Once the temperature of the hot water HW, sensed by the water temperature sensing member 16, reaches the predetermined value, the water heating mode without water supply (S12) ends, and the determining of the temperature of hot water (S10) is performed and it is waited until the hot water is discharged (S20).

While FIG. 6 illustrates an example in which the determining of the temperature of hot water (S10) is performed at an initial stage, this is merely exemplary for simple illustration and better understanding of the present disclosure. That is, the determining of the temperature of hot water (S10) may be performed continuously regardless of whether the hot water is discharged, and if the temperature of the hot water is lower than the reference temperature, the water heating mode without water supply (S12) may be performed.

Further, once the hot water is discharged (S20) as a user uses the hot water HW, a water surface of the hot water HW drops. Then, the capacity changing member 14 is moved by an amount, corresponding to a water discharge amount, by the driving member 146 in one direction (e.g., downward direction), thereby reducing the storage space S in which the hot water HW is placed (S30). In this case, while the flow rate control valve 144a of the water inlet tube 144 is closed so that the service water may not flow into the storage space S, the capacity changing member 14 is moved to change a capacity of the storage space (i.e., to reduce the capacity).

Once the hot water is discharged (S20), it is determined whether a water level of the hot water HW is lower than or equal to a reference water level in determining of a level of the hot water (S40). In this case, if the level of the hot water HW is higher than a reference water level, it is waited until the hot water is discharged (S20) while the determining of the temperature of the hot water (S10) is performed. If the level of the hot water HW is lowered than or equal to the reference water level as the hot water HW is discharged, a water heating mode with water supply (S50) is performed. More specifically, if the reference water level sensing member 16 senses that the level of the hot water HW is lower than or equal to the reference water level, the service water or the hot water HW in the water-heater tank 10 is heated by circulating the service water heat-exchanged by the indoor heat exchanger 112 by the 3-way valve 118. The water heating mode with water supply (S50) may be performed when the level of the hot water HW is lowered due to discharge of the hot water HW, and the like. As described above, the water heating mode with water supply (S50) is performed when the level of the hot water HW is lower than or equal to the reference water level, such that the water heating mode with water supply (S50) may be performed by supplying the service water when discharge of the hot water HW is stopped.

More specifically, in the water heating mode with water supply (S50), the service water may be introduced repeatedly at predetermined intervals. That is, the water heating mode with water supply (S50) may be performed by repeating, a plurality of number of times, a water supply period in which while continuously performing the water heating mode, the flow rate control valve 144a is temporarily opened to allow the service water to be supplied in an amount corresponding to a portion of a required amount, and a water supply blocking period in which the flow rate control valve 144a is closed to block the supply of service water. This is for the purpose of preventing a problem, which may occur when the temperature of the hot water HW is sharply reduced, by providing the water supply blocking period in consideration of a rising temperature of the hot water in the water-heater tank 10. The water heating mode with water supply (S50) may be performed when the capacity changing member 50 is located at an initial position (i.e., position corresponding to a maximum capacity of the storage space S), and may be performed continuously until temperature of the hot water HW, which is sensed by the water temperature sensing member 16, reaches a predetermined value. If the hot water HW is discharged during the water heating mode with water supply (S50), the water heating mode with water supply (S50) is temporarily stopped during the discharge of the hot water HW, and after the discharge of the hot water HW is stopped, the water heating mode with water supply (S50) may be performed again. Here, even when the water heating mode with water supply (S50) is temporarily stopped, heating may be performed continuously through the pipe members 136c, 137, and 138. The state in which the heating mode with water supply (S50) is temporarily stopped may indicate a state in which at least the water supply period is not performed. When the capacity changing member 50 is located at the initial position, and the temperature of the hot water HW, sensed by the water temperature sensing member 16, reaches the predetermined value, the water heating mode with water supply (S50) ends, and it is waited until the hot water is discharged (S20) while the determining of the temperature of the hot water (S10) is performed.

As described above, in this embodiment, the supply of service water, having a lower temperature than the temperature of the hot water HW, is blocked when the hot water WH is discharged, thereby preventing or minimizing temperature gradient or stratification which may occur when water having a relatively low temperature is introduced. That is, by changing a capacity of the storage space S in real time as the hot water HW is used, stratification or temperature gradient may be prevented or minimized. Accordingly, the temperature of the hot water HW may be maintained as high as possible, and the influence of an external environment may be minimized. Further, the water heating mode with water supply (S50) is performed only when a level of the hot water HW is lower than or equal to the reference water level, such that a number of times and a period of the water heating mode for heating the hot water HW in the water-heater tank 10 may be reduced. In addition, the water heating mode with water supply (S50) is performed by supplying service water while the discharge of the hot water HW is stopped, such that turbulence occurs in the water-heater tank 10 due to a high Reynolds number, and heat transfer may take place by forced convection. In this case, compared to natural convection, thermal resistance may be significantly reduced, thereby greatly improving heat exchange efficiency.

In the aforementioned embodiments, when the hot water HW is discharged in the water heating mode with water supply (S50), the water heating mode with water supply (S50) (particularly, water supply period) is temporarily stopped, and after discharge of the hot water HW is stopped, the water heating mode with water supply (S50) (particularly, water supply period) is performed again. By providing the reference water level sensing member 16, a sufficient amount of the hot water HW which is basically stored may be secured, such that even when the supply of service water is stopped during discharge of the hot water HW, a sufficient amount of hot water HW may be discharged. Accordingly, various modifications may be made, in which if a supply of water is required, such as in the case where an amount of the hot water HW is insufficient in the water heating mode with water supply (S50), service water may be supplied by sensing a discharge amount and temperature of the hot water HW, and the like.

### [Explanation of reference numerals]

100: heat pump system
10: water-heater tank
12: main body
14: capacity changing member
16: reference water level sensing member
18: water temperature sensing member

## Claims

1. A water-heater tank (10) for a heat pump system, the water-heater tank comprising:
a main body (12) having an internal space and one open side; and
a capacity changing member (14) arranged to close the one open side of the main body (12) and thereby form a storage space in the internal space of the main body (12), in which hot water can be stored, and being movable relative to the main body (12) so that a capacity of the storage space can be changed as the hot water is discharged, wherein the capacity changing member (14) comprises a water inlet tube (144) for supplying feed water into the storage space, and a water outlet tube (142) for discharging the hot water from the storage space,
**characterized in that** the water-heater tank (10) further comprises a driving member coupled to the capacity changing member (14) and configured for providing a driving force to move the capacity changing member (14),
wherein the water inlet tube (144) is fixedly installed at the capacity changing member (14) and has a flow rate control valve (144a), and
wherein when the hot water is discharged, the flow rate control valve (144a) is closed to block inflow of water into the storage space.

2. The water-heater tank (10) of claim 1, wherein the water outlet tube (142) includes a fixed portion (142a) fixedly installed at the capacity changing member (14),
wherein the fixed portion (142a) of the water outlet tube (142) is moveable along with the capacity changing member (14), such that even when the capacity changing member (14) is moved, a constant distance is maintained between an end portion (IE1) of the fixed portion (142a) of the water outlet tube (142), and the capacity changing member (14).

3. The water-heater tank (10) of claim 2, wherein the water outlet tube (142) further comprises a variable length portion (142b) having a variable length.

4. The water-heater tank (10) of claim 3, wherein:
the variable length portion (142b) is made of a flexible material or an elastic material, which is different from other portions of the water outlet tube (142); or
the variable length portion (142b) has a corrugated shape; or
the water outlet tube (142) has a double pipe structure with an inner tube and an outer tube, such that the variable length portion (142b) has a variable length equal to or less than a length of an overlapping portion of the inner tube and the outer tube.

5. The water-heater tank (10) of any one of claims 1 to 4, wherein the capacity changing member (14) comprises an inner portion (14a) and a pressed portion (14b) formed along the inner portion (14a), wherein a material of the inner portion (14a) is harder than that of the pressed portion (14b).

6. The water-heater tank (10) of any one of claims 1 to 5, wherein:
the capacity changing member (14) is configured to float on the hot water by buoyancy.

7. The water-heater tank (10) of any one of claims 1 to 6, further comprising a reference water level sensing member (16) disposed at a reference position in the storage space.

8. The water-heater tank (10) of any one of claims 1 to 7, wherein the water-heater tank (10) is configured such that in response to the capacity changing member (14) being positioned at a reference water level or below, water to be heated is introduced into the water-heater tank (10) while the discharge of the hot water is stopped.

9. A method of controlling a water-heater tank (10) for a heat pump system according to any one of claims 1-8, the water-heater tank (10) comprising a main body (12) having an internal space and one open side; a capacity changing member (14) arranged to close the one open side of the main body (12) and thereby form a storage space in the internal space of the main body (12), in which hot water can be stored, the capacity changing member (14) being moveable relative to the main body (12) and having a water inlet tube (144) for supplying feed water into the storage space and a water outlet tube (142) for discharging the hot water from the storage space, the method comprising:
moving the capacity changing member (14) so that a capacity of the storage space is changed when the hot water is discharged from the storage space and inflow of the feed water into the storage space is blocked.

10. The method of claim 9, wherein in response to a level of the hot water being lower than or equal to a reference water level as the hot water is discharged, performing a water heating mode of supplying feed water into the storage space and heating the feed water.

11. The method of claim 10, wherein the water heating mode is performed while the discharge of the hot water is stopped.

12. The method of claim 10 or 11, wherein:
in the water heating mode, a water supply period and a water supply blocking period are performed repeatedly while the hot water is heated continuously; and
in response to the capacity changing member (14) being located at an initial position and a water temperature, sensed by a water temperature sensing member, reaching a predetermined value, the water heating mode ends.

## Patentansprüche

1. Wasserheiztank (10) für ein Wärmepumpensystem, wobei der Wasserheiztank aufweist:
einen Hauptkörper (12) mit einem Innenraum und einer offenen Seite; und
ein Kapazitätsänderungselement (14), das so angeordnet ist, dass es die eine offene Seite des Hauptkörpers (12) verschließt und dadurch einen Speicherraum im Innenraum des Hauptkörpers (12) bildet, in dem heißes Wasser gespeichert werden kann, und das relativ zum Hauptkörper (12) beweglich ist, so dass eine Kapazität des Speicherraums geändert werden kann, wenn das heiße Wasser abgegeben wird, wobei das Kapazitätsänderungselement (14) ein Wassereinlassrohr (144) zum Zuführen von Speisewasser in den Speicherraum und ein Wasserauslassrohr (142) zum Abgeben des heißen Wassers aus dem Speicherraum aufweist,
**dadurch gekennzeichnet, dass** der Wasserheiztank (10) ferner ein Antriebselement aufweist, das mit dem Kapazitätsänderungselement (14) gekoppelt und konfiguriert ist, eine Antriebskraft bereitzustellen, um das Kapazitätsänderungselement (14) zu bewegen, wobei das Wassereinlassrohr (144) fest am Kapazitätsänderungselement (14) installiert ist und ein Durchflussregelventil (144a) aufweist, und
wobei, wenn das heiße Wasser abgegeben wird, das Durchflussregelventil (144a) geschlossen wird, um den Zufluss von Wasser in den Speicherraum zu blockieren.

2. Wasserheiztank (10) nach Anspruch 1, wobei das Wasserauslassrohr (142) einen festen Abschnitt (142a) aufweist, der fest am Kapazitätsänderungselement (14) installiert ist, wobei der feste Abschnitt (142a) des Wasserauslassrohrs (142) zusammen mit dem Kapazitätsänderungselement (14) beweglich ist, so dass, selbst wenn das Kapazitätsänderungselement (14) bewegt wird, ein konstanter Abstand zwischen einem Endabschnitt (IE1) des festen Abschnitts (142a) des Wasserauslassrohrs (142) und dem Kapazitätsänderungselement (14) beibehalten wird.

3. Wasserheiztank (10) nach Anspruch 2, wobei das Wasserauslassrohr (142) ferner einen Abschnitt (142b) mit variabler Länge aufweist.

4. Wasserheiztank (10) nach Anspruch 3, wobei:
der Abschnitt (142b) mit variabler Länge aus einem flexiblen Material oder einem elastischen Material besteht, das sich von den anderen Abschnitten des Wasserauslassrohrs (142) unterscheidet; oder
der Abschnitt mit variabler Länge (142b) eine gewellte Form aufweist; oder
das Wasserauslassrohr (142) eine Doppelrohrstruktur mit einem Innenrohr und einem Außenrohr aufweist, so dass der Abschnitt (142b) mit variabler Länge eine variable Länge aufweist, die gleich oder kleiner ist als eine Länge eines überlappenden Abschnitts des Innenrohrs und des Außenrohrs.

5. Wasserheiztank (10) nach einem der Ansprüche 1 bis 4, wobei das Kapazitätsänderungselement (14) einen inneren Abschnitt (14a) und einen gepressten Abschnitt (14b) aufweist, der entlang des inneren Abschnitts (14a) ausgebildet ist, wobei ein Material des inneren Abschnitts (14a) härter ist als das des gepressten Abschnitts (14b).

6. Wasserheiztank (10) nach einem der Ansprüche 1 bis 5, wobei:
das Kapazitätsänderungselement (14) ausgebildet ist, durch Auftrieb auf dem heißen Wasser zu schwimmen.

7. Wasserheiztank (10) nach einem der Ansprüche 1 bis 6, der ferner ein Referenzwasserstands-Erfassungselement (16) aufweist, das an einer Referenzposition im Speicherraum angeordnet ist.

8. Wasserheiztank (10) nach einem der Ansprüche 1 bis 7, wobei der Wasserheiztank (10) so konfiguriert ist, dass als Reaktion darauf, dass das Kapazitätsänderungselement (14) auf einem Referenzwasserstand oder darunter positioniert ist, zu erhitzendes Wasser in den Wasserheiztank (10) eingeleitet wird, während die Abgabe des heißen Wassers gestoppt wird.

9. Verfahren zum Steuern eines Wasserheiztanks (10) für ein Wärmepumpensystem nach einem der Ansprüche 1 bis 8, wobei der Wasserheiztank (10) einen Hauptkörper (12), der einen Innenraum und eine offene Seite aufweist; und ein Kapazitätsänderungselement (14) aufweist, das so angeordnet ist, dass es die eine offene Seite des Hauptkörpers (12) verschließt und dadurch einen Speicherraum in dem Innenraum des Hauptkörpers (12) bildet, in dem heißes Wasser gespeichert werden kann, wobei das Kapazitätsänderungselement (14) relativ zu dem Hauptkörper (12) beweglich ist und ein Wassereinlassrohr (144) zum Zuführen von Speisewasser in den Speicherraum und ein Wasserauslassrohr (142) zum Ablassen des heißen Wassers aus dem Speicherraum aufweist, wobei das Verfahren aufweist:
Bewegen des Kapazitätsänderungselements (14), so dass eine Kapazität des Speicherraums geändert wird, wenn das heiße Wasser aus dem Speicherraum abgegeben wird und der Zufluss des Speisewassers in den Speicherraum blockiert wird.

10. Verfahren nach Anspruch 9, wobei als Reaktion auf einen Stand des heißen Wassers, der niedriger oder gleich einem Referenzwasserstand ist, wenn das heiße Wasser abgegeben wird, ein Wasserheizmodus zum Zuführen von Speisewasser in den Speicherraum und Erhitzen des Speisewassers durchgeführt wird.

11. Verfahren nach Anspruch 10, wobei der Wasserheizmodus durchgeführt wird, während die Abgabe des heißen Wassers gestoppt ist.

12. Verfahren nach Anspruch 10 oder 11, wobei:
im Wasserheizmodus eine Wasserzufuhrperiode und eine Wasserzufuhrsperrperiode wiederholt durchgeführt werden, während das heiße Wasser kontinuierlich geheizt wird; und
als Reaktion darauf, dass sich das Kapazitätsänderungselement (14) in einer Anfangsposition befindet und eine Wassertemperatur, die durch ein Wassertemperatur-Erfassungselement erfasst wird, einen vorbestimmten Wert erreicht, der Wasserheizmodus endet.

## Revendications

1. Réservoir de chauffe-eau (10) pour un système de pompe à chaleur, ledit réservoir de chauffe-eau comprenant :
un corps principal (12) ayant un espace intérieur et un côté ouvert ; et
un élément de variation de capacité (14) prévu pour fermer le côté ouvert du corps principal (12) et former ainsi un espace de stockage dans l'espace intérieur du corps principal (12), dans lequel de l'eau chaude peut être stockée, et déplaçable par rapport au corps principal (12) de manière à pouvoir modifier la capacité de l'espace de stockage lorsque l'eau chaude est évacuée, ledit élément de variation de capacité (14) comprenant un tuyau d'entrée d'eau (144) pour alimenter l'espace de stockage en eau, et un tuyau de sortie d'eau (142) pour évacuer l'eau chaude de l'espace de stockage,
**caractérisé en ce que** ledit réservoir de chauffe-eau (10) comprend en outre un élément d'entraînement relié à l'élément de variation de capacité (14) et prévu pour appliquer une force d'entraînement afin de déplacer l'élément de variation de capacité (14),
où le tuyau d'arrivée d'eau (144) est installé de manière fixe sur l'élément de variation de capacité (14) et comporte une vanne de régulation de débit (144a), et où,
lorsque l'eau chaude est évacuée, la vanne de régulation de débit (144a) est fermée pour arrêter l'admission d'eau dans l'espace de stockage.

2. Réservoir de chauffe-eau (10) selon la revendication 1, où le tuyau de sortie d'eau (142) comprend une partie fixe (142a) installée de manière fixe sur l'élément de variation de capacité (14),
où la partie fixe (142a) du tuyau de sortie d'eau (142) est mobile avec l'élément de variation de capacité (14), de sorte que, même lorsque l'élément de variation de capacité (14) est déplacé, une distance constante est maintenue entre une partie d'extrémité (IE1) de la partie fixe (142a) du tuyau de sortie d'eau (142) et l'élément de variation de capacité (14).

3. Réservoir de chauffe-eau (10) selon la revendication 2, où le tuyau de sortie d'eau (142) comprend en outre une partie de longueur variable (142b) ayant une longueur variable.

4. Réservoir de chauffe-eau (10) selon la revendication 3, où :
la partie de longueur variable (142b) est faite d'un matériau flexible ou élastique, différent des autres parties du tuyau de sortie d'eau (142) ; ou
la partie de longueur variable (142b) a une forme ondulée ; ou
le tuyau de sortie d'eau (142) a une structure à double tuyau avec un tuyau intérieur et un tuyau extérieur, de sorte que la partie de longueur variable (142b) a une longueur variable égale ou inférieure à la longueur d'une partie de chevauchement du tuyau intérieur et du tuyau extérieur.

5. Réservoir de chauffe-eau (10) selon l'une des revendications 1 à 4, où l'élément de variation de capacité (14) comprend une partie intérieure (14a) et une partie plaquée (14b) formée le long de la partie intérieure (14a), le matériau de la partie intérieure (14a) étant plus dur que celui de la partie plaquée (14b).

6. Réservoir de chauffe-eau (10) selon l'une des revendications 1 à 5, où :
l'élément de variation de capacité (14) est prévu pour flotter sur l'eau chaude par flottabilité.

7. Réservoir de chauffe-eau (10) selon l'une des revendications 1 à 6, comprenant en outre un élément de détection de niveau d'eau de référence (16) disposé à un emplacement de référence dans l'espace de stockage.

8. Réservoir de chauffe-eau (10) selon l'une des revendications 1 à 7, où ledit réservoir de chauffe-eau (10) est prévu de sorte qu'en réaction au positionnement de l'élément de variation de capacité (14) au niveau d'eau de référence ou en dessous de celui-ci, de l'eau à chauffer est introduite dans le réservoir de chauffe-eau (10) pendant que l'évacuation de l'eau chaude est arrêtée.

9. Procédé de commande d'un réservoir de chauffe-eau (10) pour un système de pompe à chaleur selon l'une des revendications 1 à 8, ledit réservoir de chauffe-eau (10) comprenant un corps principal (12) ayant un espace intérieur et un côté ouvert ; un élément de variation de capacité (14) prévu pour fermer le côté ouvert du corps principal (12) et former ainsi un espace de stockage dans l'espace intérieur du corps principal (12), dans lequel de l'eau chaude peut être stockée, ledit élément de variation de capacité (14) étant déplaçable par rapport au corps principal (12) et comportant un tuyau d'entrée d'eau (144) pour alimenter l'espace de stockage en eau, et un tuyau de sortie d'eau (142) pour évacuer l'eau chaude de l'espace de stockage, ledit procédé comprenant :
le déplacement de l'élément de variation de capacité (14) de manière à modifier la capacité de l'espace de stockage lorsque l'eau chaude est évacuée de l'espace de stockage et à arrêter l'admission de l'eau d'alimentation dans l'espace de stockage.

10. Procédé selon la revendication 9, où, en réaction à un niveau d'eau chaude inférieur ou égal au niveau d'eau de référence lorsque l'eau chaude est évacuée, un mode de chauffage d'eau consistant à alimenter en eau l'espace de stockage et à chauffer l'eau d'alimentation est exécuté.

11. Procédé selon la revendication 10, où le mode de chauffage d'eau est exécuté pendant que l'évacuation de l'eau chaude est arrêtée.

12. Procédé selon la revendication 10 ou la revendication 11, où :
dans le mode de chauffage d'eau, une période d'alimentation en eau et une période d'arrêt de l'alimentation en eau sont appliquées de manière répétée pendant que l'eau chaude est chauffée en continu ; et où,
en réaction au positionnement de l'élément de variation de capacité (14) dans une position initiale et à la détection, par un élément de détection de température d'eau, d'une température d'eau atteignant une valeur définie, le mode de chauffage d'eau est terminé.
